# EUROPEAN PATENT SPECIFICATION

(11) **EP 3 435 558 B1**
(45) Date of publication and mention of the grant of the patent: **17.02.2021**
(21) Application number: 17182765.2
(22) Date of filing: 24.07.2017
(51) Int. Cl.: H04B 10/112, H04B 10/114, H04J 14/02

(54) **LOCAL COMMUNICATION NETWORK, TRANSCEIVER NODE, AND METHOD**
DRAHTLOSKOMMUNIKATIONSNETZWERK, SENDEEMPFÄNGERKNOTEN UND VERFAHREN
NOEUD DE RÉSEAU DE COMMUNICATION SANS FIL ET PROCÉDÉ

(43) Date of publication of application: 30.01.2019
(73) Proprietor: Deutsche Telekom AG, 53113 Bonn (DE)
(72) Inventor: BUNGE, Christian-Alexander, 14532 Kleinmachnow (DE); NOLAN, Julian Charles, 1009 Pully (CH); WALKER, Nicholas, Twickenham, Middlesex TW1 4JX (GB)
(74) Representative: Vossius & Partner Patentanwälte Rechtsanwälte mbB

(56) References cited:
- EP-A1- 1 545 027
- WO-A1-2012/167135
- WO-A1-2014/053175
- JP-A- 2014 050 033
- US-A1- 2015 023 666
- US-A1- 2016 086 994

## Description

### Field of the invention

The invention relates to a local communications network, a transceiver node for use in a local communications network, and a method for use in a local communications network having at least two transceiver nodes and a topology planning algorithm.

### Background

Light field cameras organize light received onto their sensor array as a 4D field of position and light direction. This is performed, for example, by locating a microlens above a patch of the pixel array. The microlens focuses light from a small range of directions onto a position under the microlens, i.e. at a certain position light incidence angle is converted into a local position array.

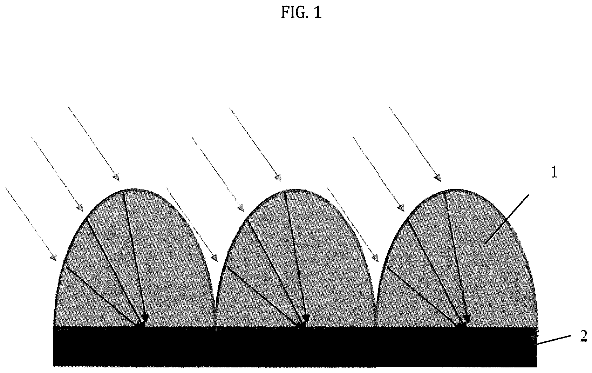

Fig. 1 shows an example of how the specific angles map to different pixel positions within the subarrays. An image forming lens 1 focuses a standard camera image onto this array 2.

Light is focused onto the array in a normal camera fashion. Information from the camera can be organized into different types of images, for example an image representing a single direction, or a single focal plane, by selecting the data from different positions within the subarrays. Alternatively, data from across the whole array can be integrated to produce, for example the summed light from a specific direction.

A number of different technologies are becoming available to construct high resolution, multipixel image sensor arrays on flexible substrates, i.e. flexible sensor arrays. These substrates can be bent whilst continuing to act as imagers.

EP 1 545 027 A1 relates to a method of establishing a communication connection between a versatile first object, as well as a communication system for carrying out this method. The communication system comprising a laser communication unit comprising a laser transmission unit for emitting a laser beam containing encoded information and a laser receiving unit for receiving such a laser beam.

WO 2014/053175 A1 relates to an optical validating path in an optical layer of a communications network, for client traffic having an associated service level, involves setting an optical quality margin according to the service level associated with that client traffic.

WO 2012/167135 A1 relates to systems and methods for enabling nodes of a free-space optical communication system to maintain pointing alignment of their transmitted optical beams.

US 2016/086994 A1 relates to techniques for fabricating an image sensor chip having a curved surface including placing a bending substrate on a first surface of an imaging sensor chip.

### Technical problem

If a transceiver is off to the side of a sensor and cannot be imaged, then the sensor will have to be moved (have its viewing angle changed) to bring that transceiver into view. The relationship between light angle and absolute angle of the light incident on the sensor can be altered by changing the direction of the camera (naturally). However, this causes an equal change across all the light direction fields and the total angle of view of the sensor remains the same. But if the shape of the light field array surface is changed, then the angle to position function for different parts of the array will change differently.

It is an object of the invention to provide a local communications network comprising at least two transceiver nodes, a transceiver node for use in a local communications network, and a method for use in a local communications network taking into account the above aforementioned problems.

### Summary of the invention

This object is achieved with the features of the independent claims.

A local communications network according to the invention comprises at least two transceiver nodes and a topology planning algorithm. Each transceiver node comprises an optical emitter, a reconfigurable optical receiver, a receiver configurer, an estimator algorithm, and a receiver reconfiguration procedure. The topology planning algorithm is configured to run on one or more transceiver nodes, to take a set of Data Quality Estimations from all transceiver nodes, choose an optimal network topology which maximizes overall network data rates, and output the result as a Current Network Topology, which is transmitted to all local nodes.

The optical emitter may be configured to direct a light beam modulated by output data at the other transceiver nodes.

The optical receiver may comprise a light field camera configured to integrate light collected from each different emitter and to demodulate it to produce input data, a plurality of direction actuators configured to move the camera in pitch and yaw, and a plurality of warping actuators configured to warp the sensor surface of the light field camera between different shapes.

In a preferred embodiment, the receiver configurer may be configured to take a defined receiver configuration and to set the values of the direction actuators and warping actuators to those required in that configuration.

The estimator algorithm may be configured to determine the anticipated signal quality of links to other nodes at different settings of its confirmation parameters, based on its knowledge of the data rates to those nodes experienced in the past and on known geometric effects of the changes in configuration and which is further configured to generate and to communicate to all the other nodes a data quality estimation describing this.

The receiver reconfiguration procedure may be configured to take the Current Network Topology, to choose the receiver configuration that maximizes data rates for links within the topology whilst ignoring links not in the topology, and to send this receiver configuration to the receiver configurer.

A transceiver node for use in a local communications network, wherein the receiver node comprises an optical emitter, a reconfigurable optical receiver, a receiver configurer, an estimator algorithm, and a receiver reconfiguration procedure. The optical receiver comprises a light field camera configured to integrate light collected from each different emitter and to demodulate it to produce input data, a plurality of direction actuators configured to move the camera in pitch and yaw, and a plurality of warping actuators configured to warp the sensor surface of the light field camera between different shapes.

The receiver configurer may be configured to take a defined receiver configuration and to set the values of the direction actuators and warping actuators to those required in that configuration.

The receiver reconfiguration procedure may be configured to take a Current Network Topology, to choose the receiver configuration that maximizes data rates for links within the topology whilst ignoring links not in the topology, and to send this receiver configuration to the receiver configurer.

According to the invention, a method for a local communications network having at least two transceiver nodes and a topology planning algorithm, wherein each transceiver node comprises an optical emitter, a reconfigurable optical receiver, a receiver configurer, an estimator algorithm, a receiver reconfiguration procedure, said method comprising the steps of: a) each transceiver node executing its estimator algorithm and generating a signal quality estimation, which is communicated to other transceiver nodes, b) the topology planning algorithm executing on the network using all the local data quality estimations and generating a current network topology and communicating the generated current network topology to all nodes, c) each node executing the receiver reconfiguration procedure and the receivers are configured using the receiver configuration for the current network topology, and repeating steps a) to c), if while exchanging data the data quality between any nodes degrades sufficiently or a specific time interval is reached.

The issues being solved by this invention include: a network of local transceivers needs to organize itself to maintain the best communications possible, given that communication between certain transceivers may be obscured by objects between them, or two transceivers may be on the same line of sight from another transceiver, or haze and mist might degrade a communication link; and light field cameras can improve the ability to differentiate multiple observer emitters in the field of view, but sometimes a greater field of view or better angular rather than spatial resolution may improve this still further, in certain circumstances. Therefore, there are benefits to light field cameras with the ability to modify their imaging configuration when detecting signals from optical emitters.

Light field cameras detect light and are able to determine the position of the objects in the field of view (x, y) and the direction of light incident on the sensor at that position (θ, φ). They are only able to receive data from emitters in their field of view and the ability to separate different transceivers may not be possible even with their improved ability to generate images at e.g. different focal depths.

The data from a light field camera can be reorganized, e.g. by integrating different data from the 4D array, to integrate information at different focal depths, light directions or positions.

The light field camera can be moved laterally or vertically, using a suitable actuator, to change the field of view of that camera.

If the light field sensor is manufactured using a technique which allows a flexible sensor array, the shape of the imaging surface in a light field camera can also be altered so that the relationship between light direction and position on the light direction subarray varies across the camera, e.g. by warping, using an actuator, the imaging surface from flat to, for example, cylindrical or hemispherical. These changes can improve the ability to increase the field of view or to separate different transceivers according to their position and the angle of light from them, e.g. to separate their distance away.

Local transceiver networks can reconfigure themselves if required, for example to maximize data transmission rates, by routing information to that node through one or more other nodes. Given that changes to the arrangement of receivers, e.g. their orientation, may result in improvements to one link but degradation of another link, different choices of the network topology and therefore receiver configuration of each node (seeking to maximize the quality of the data link between those connections in the topology but ignoring those connections not in the topology) may result in significantly different overall network data rates.

The optimal choice of overall network topology can be determined if the quality of the set of inter-node links for all the local transceivers given their different receiver configurations is known.

Given a specific network topology, a receiver can configure itself to maximize the quality of the links active in that topology whilst ignoring the links absent in the topology. Therefore, a process can be performed which continuously reconfigures the network and the receiver configurations of each node in order to maximize data transmission rates. According to the present invention, this process can be summarized as follows: a) first each transceiver estimates the communication data quality to the other local transceivers for different light field warping configurations of its receiver; b) secondly these estimates are communicated to the rest of local transceivers; c) thirdly based on the estimates from all the local transceivers a network topology is chosen which maximizes data transmission rates (e.g. also taking into account the current data communications requirements between nodes); d) fourthly this chosen topology is communicated to all the local transceivers; e) lastly each transceiver optimizes its light field warping receiver configuration to maximize the quality of all the links within that topology whilst ignoring the links not in the topology.

Light field cameras with flexible light sensor arrays can be reconfigured by changing their direction and shape to improve reception or separation with other emitters in specific directions and distances, though there will be a tradeoff in terms of possibly worsening reception for other emitters.

Networks can continually maintain optimal data rates taking advantage of the properties of the advanced optical receivers and their ability to optimize themselves for certain connections.

### Brief description of the drawings

- FIG. 1: is an example of how the specific angles map to different pixel positions within the subarrays.
- FIG. 2: is an example of a flexible light field camera for optical receivers with a flat surface.
- FIG. 3: is an example of a flexible light field camera for optical receivers with a hemispherical surface.
- FIG. 4: is a flowchart summarizing the main method.

### Detailed description of the invention

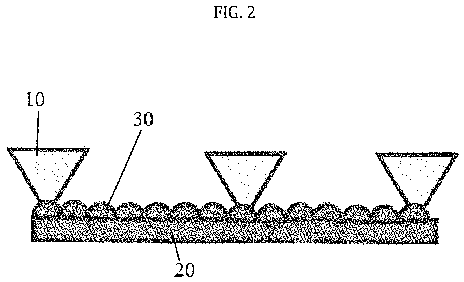

FIG. 2 shows an exemplary flexible light field camera for optical receivers 30. The shape of the array is configured to best integrate information from one or more observed transceivers by warping the array 20 from flat to a hemispherical or a cylindrical surface. The light fields at the center of the array do not change, but those at the edge are altered to view light 10 more to the side of the array and less towards the center of the array.

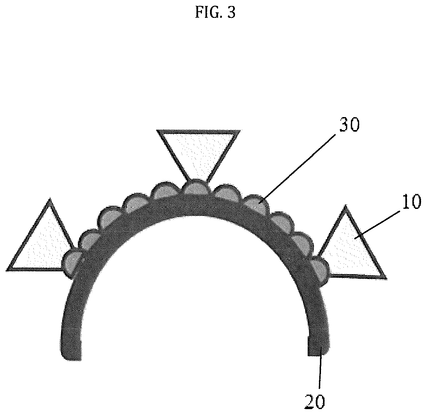

By changing the shape of the array 20, as shown in FIG. 3, the mapping between light direction 10 and subarray 30 position becomes different at different positions on the whole array 20. In this way, a transceiver off to one side can be brought into view, whilst maintaining viewing of the transceivers already being monitored, albeit with less information integration between array elements and, therefore, decreased signal to noise.

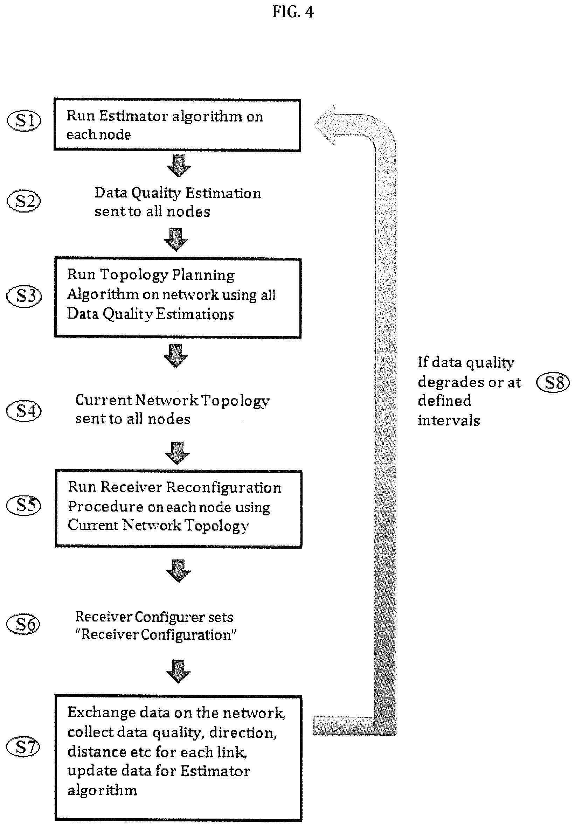

Hereunder, an exemplary method will be described in detail with reference to FIG. 4.

According to the invention, the method is for a local communications network having at least two transceiver nodes, wherein each transceiver node comprises an optical emitter, a reconfigurable optical receiver, a receiver configurer, an estimator algorithm, a receiver reconfiguration procedure, and a topology planning algorithm. According to the embodiment illustrated in Fig. 4, the method comprising the following steps.

First each transceiver node executes its estimator algorithm (S1) and generates a signal quality estimation, which is then communicated to the other transceiver nodes (S2).

Then, the topology planning algorithm is executed on the network using all the local data quality estimations (S3). As a result, a current network topology is generated and communicated to all nodes (S4).

After the step S4, each node executes the receiver reconfiguration procedure using the current network topology (S5). Then, the receivers are configured using the receiver configuration for the current network topology (S6).

At this stage, the nodes continue to exchange data (S7), e.g. collect data quality, direction, distance etc. for each link, update data for estimator algorithm. If, at any moment, data quality between any of the nodes is degraded sufficiently (S8), then the process, steps S1 to S6, is repeated or if a specific time interval is reached, the process is also repeated.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A local communications network comprising:
at least two transceiver nodes, wherein each transceiver node comprises an optical emitter, a reconfigurable optical receiver, a receiver configurer, wherein each transceiver node is configured to execute an estimator algorithm and to execute a receiver reconfiguration procedure using a current network topology; and
a topology planning algorithm configured to run on one or more transceiver nodes, to take a set of Data Quality Estimations from all transceiver nodes, choose an optimal network topology which maximizes overall network data rates, and output the result as the Current Network Topology which is transmitted to all local nodes.

2. The local communications network of claim 1, wherein the optical emitter is configured to direct a light beam modulated by output data at the other transceiver nodes.

3. The local communications network of claims 1 or 2, wherein the optical receiver comprises:
a light field camera configured to integrate light collected from each different emitter and to demodulate it to produce input data,
a plurality of direction actuators configured to move the camera in pitch and yaw, and
a plurality of warping actuators configured to warp the sensor surface of the light field camera between different shapes.

4. The local communications network of claims 1 to 3, wherein the receiver configurer is configured to take a defined receiver configuration and to set the values of the direction actuators and warping actuators to those required in that configuration.

5. The local communications network of claims 1 to 4, wherein the estimator algorithm is configured to determine the anticipated signal quality of links to other nodes at different settings of its confirmation parameters, based on its knowledge of the data rates to those nodes experienced in the past and on known geometric effects of the changes in configuration and which is further configured to generate and to communicate to all the other nodes a data quality estimation describing this.

6. The local communications network of claims 1 to 5, wherein the receiver reconfiguration procedure is configured to take the Current Network Topology, to choose the receiver configuration that maximizes data rates for links within the topology whilst ignoring links not in the topology, and to send this receiver configuration to the receiver configurer.

7. A method for a local communications network having at least two transceiver nodes, wherein each transceiver node comprises an optical emitter, a reconfigurable optical receiver, a receiver configurer, an estimator algorithm, a receiver reconfiguration procedure, and a topology planning algorithm, said method comprising the steps of:
a) each transceiver node executing its estimator algorithm (S1) and generating a signal quality estimation, which is communicated to other transceiver nodes (S2),
b) the topology planning algorithm executing on the network using all the local data quality estimations (S3) and generating a current network topology and communicating the generated current network topology to all nodes (S4),
c) each node executing the receiver reconfiguration procedure using the current network topology (S5) and the receivers are configured using the receiver configuration for the current network topology (S6), and
repeating steps a) to c), if while exchanging data the data quality between any nodes degrades sufficiently or a specific time interval is reached.

## Patentansprüche

1. Lokales Kommunikationsnetzwerk, das aufweist:
mindestens zwei Sendeempfängerknoten, wobei jeder Sendeempfängerknoten einen optischen Sender, einen rekonfigurierbaren optischen Empfänger und einen Empfängerkonfigurator aufweist, wobei jeder Sendeempfängerknoten konfiguriert ist, einen Schätzalgorithmus auszuführen und eine Empfänger-Rekonfigurationsprozedur unter Verwendung einer gegenwärtigen Netzwerktopologie auszuführen; und
einen Topologie-Planungsalgorithmus, der konfiguriert ist, auf einem oder mehreren Sendeempfängerknoten ausgeführt zu werden, um einen Satz von Datenqualitätsschätzungen von allen Sendeempfängerknoten vorzunehmen, eine optimale Netzwerktopologie auszuwählen, die die Gesamtnetzwerkdatenraten maximiert, und das Ergebnis als gegenwärtige Netzwerktopologie auszugeben, die an alle lokalen Knoten übertragen wird.

2. Lokales Kommunikationsnetzwerk nach Anspruch 1, wobei der optische Sender konfiguriert ist, einen mit Ausgangsdaten modulierten Lichtstrahl auf die anderen Sendeempfängerknoten zu richten.

3. Lokales Kommunikationsnetzwerk nach Anspruch 1 oder 2, wobei der optische Empfänger aufweist:
eine Lichtfeldkamera, die konfiguriert ist, von jedem anderen Sender gesammeltes Licht zu integrieren und es zu demodulieren, um Eingabedaten zu erzeugen,
mehrere Richtungsstellelemente, die konfiguriert sind, die Kamera in Nick- und Gierrichtung zu bewegen, und mehrere Wölbungsstellelemente, die konfiguriert sind, die Sensorfläche der Lichtfeldkamera zwischen unterschiedlichen Formen zu wölben.

4. Lokales Kommunikationsnetzwerk nach einem der Ansprüche 1 bis 3, wobei der Empfängerkonfigurator konfiguriert ist, eine definierte Empfängerkonfiguration anzunehmen und die Werte der Richtungsstellelemente und Wölbungsstellelemente auf die in dieser Konfiguration erforderlichen einzustellen.

5. Lokales Kommunikationsnetzwerk nach einem der Ansprüche 1 bis 4, wobei der Schätzalgorithmus konfiguriert ist, die voraussichtliche Signalqualität von Verbindungen zu anderen Knoten bei unterschiedlichen Einstellungen seiner Bestätigungsparameter beruhend auf seiner Kenntnis der Datenraten zu diesen Knoten, die in der Vergangenheit wahrgenommen wurden, und auf bekannten geometrischen Auswirkungen von Konfigurationsänderungen zu bestimmen, und der ferner konfiguriert ist, eine Datenqualitätsschätzung, die dies beschreibt, zu erzeugen und an alle anderen Knoten zu übertragen.

6. Lokales Kommunikationsnetzwerk nach einem der Ansprüche 1 bis 5, wobei die Empfänger-Rekonfigurationsprozedur konfiguriert ist, die gegenwärtige Netzwerktopologie zu übernehmen, die Empfängerkonfiguration auszuwählen, die die Datenraten für Verbindungen innerhalb der Topologie maximiert, während Verbindungen ignoriert werden, die sich nicht in der Topologie befinden, und diese Empfängerkonfiguration an den Empfängerkonfigurator zu senden.

7. Verfahren für ein lokales Kommunikationsnetzwerk mit mindestens zwei Sendeempfängerknoten, wobei jeder Sendeempfängerknoten einen optischen Sender, einen rekonfigurierbaren optischen Empfänger, einen Empfängerkonfigurator, einen Schätzalgorithmus, eine Empfänger-Rekonfigurationsprozedur und einen Topologie-Planungsalgorithmus aufweist, wobei das Verfahren die Schritte aufweist:
a) Ausführen durch jeden Sendeempfängerknoten seines Schätzalgorithmus (S1) und Erzeugen einer Signalqualitätsschätzung, die an andere Sendeempfängerknoten (S2) übertragen wird,
b) Ausführen des Topologie-Planungsalgorithmus auf dem Netzwerk unter Verwendung aller lokalen Datenqualitätsschätzungen (S3) und Erzeugen einer gegenwärtigen Netzwerktopologie und Übertragen der erzeugten gegenwärtigen Netzwerktopologie an alle Knoten (S4),
c) Ausführen durch jeden Knoten der Empfänger-Rekonfigurationsprozedur unter Verwendung der gegenwärtigen Netzwerktopologie (S5) und Konfigurieren der Empfänger unter Verwendung der Empfängerkonfiguration für die gegenwärtige Netzwerktopologie (S6), und
Wiederholen der Schritte a) bis c), wenn sich beim Datenaustausch die Datenqualität zwischen irgendwelchen Knoten ausreichend verschlechtert oder ein bestimmtes Zeitintervall erreicht wird.

## Revendications

1. Réseau de communication local, comprenant :
au moins deux nœuds émetteurs-récepteurs, chaque nœud émetteur-récepteur comprenant un émetteur optique, un récepteur optique reconfigurable, un configurateur de récepteur, où chaque nœud émetteur-récepteur est prévu pour exécuter un algorithme d'estimation et pour exécuter une procédure de reconfiguration de récepteur au moyen d'une topologie de réseau actuelle et
un algorithme de planification de topologie prévu pour être exécuté sur un ou plusieurs nœuds émetteurs-récepteurs, pour prélever un ensemble d'estimations de qualité de données dans tous les nœuds émetteurs-récepteurs, choisir une topologie de réseau optimale qui maximise les débits de données de réseau global, et délivrer le résultat en tant que topologie de réseau actuelle transmise à tous les nœuds locaux.

2. Réseau de communication local selon la revendication 1, où l'émetteur optique est prévu pour diriger un faisceau lumineux modulé par des données de sortie sur les autres nœuds émetteurs-récepteurs.

3. Réseau de communication local selon la revendication 1 ou la revendication 2, où le récepteur optique comprend :
une caméra à champ lumineux prévue pour intégrer la lumière recueillie de chaque émetteur différent et pour démoduler celle-ci afin de produire des données d'entrée,
une pluralité d'actionneurs de direction prévus pour déplacer la caméra en tangage et en lacet, et une pluralité d'actionneurs de déformation prévus pour donner différentes formes à la surface de détection de la caméra à champ lumineux.

4. Réseau de communication local selon les revendications 1 à 3, où le configurateur de récepteur est prévu pour prendre une configuration de récepteur définie et pour fixer les valeurs des actionneurs de direction et des actionneurs de déformation telles qu'exigées dans ladite configuration.

5. Réseau de communication local selon les revendications 1 à 4, où l'algorithme d'estimation est prévu pour déterminer la qualité de signal anticipée de liaisons à d'autres nœuds à différents réglages de ses paramètres de confirmation, sur la base de sa connaissance des débits de données vers lesdits nœuds expérimentée dans le passé et d'effets géométriques connus des changements de configuration, et est en outre prévu pour générer et pour communiquer à tous les autres nœuds une estimation de qualité de données décrivant celle-ci.

6. Réseau de communication local selon les revendications 1 à 5, où la procédure de reconfiguration de récepteur est prévue pour prélever la topologie de réseau actuelle, pour choisir la configuration de récepteur maximisant les débits de données pour les liaisons à l'intérieur de la topologie en ignorant les liaisons non présentes dans la topologie, et pour adresser cette configuration de récepteur au configurateur de récepteur.

7. Procédé pour un réseau de communication local comprenant au moins deux nœuds émetteurs-récepteurs, où chaque nœud émetteur-récepteur comprend un émetteur optique, un récepteur optique reconfigurable, un configurateur de récepteur, un algorithme d'estimation, une procédure de reconfiguration de récepteur et un algorithme de planification de topologie, ledit procédé comprenant les étapes suivantes :
a) chaque nœud émetteur-récepteur exécute son algorithme d'estimation (S1) et génère une estimation de qualité de signal communiquée à d'autres nœuds émetteurs-récepteurs (S2),
b) l'algorithme de planification de topologie est exécuté sur le réseau au moyen de toutes les estimation de qualité de données (S3) locales et génère une topologie de réseau actuelle, et communique la topologie de réseau actuelle générée à tous les nœuds (S4),
c) chaque nœud exécute la procédure de reconfiguration de récepteur au moyen de la topologie de réseau actuelle (S5) et les récepteurs sont configurés au moyen de la configuration de récepteur pour la topologie de réseau actuelle (S6), et
ls étapes a) à c) sont répétées, si pendant la communication de données la qualité de données entre des nœuds quelconques est suffisamment dégradée ou qu'un intervalle temporal spécifique est écoulé.
